# EUROPEAN PATENT APPLICATION

(11) **EP 1 248 435 A2**
(43) Date of publication of application: **09.10.2002**
(21) Application number: 02007666.7
(22) Date of filing: 04.04.2002
(51) Int. Cl.: H04L 29/06, H04L 29/12, H04N 1/00

(54) **Image and sound output system via network**

(30) Priority: 05.04.2001 JP 2001107183
(71) Applicant: SEIKO EPSON CORPORATION, Tokyo 160-0811 (JP)
(72) Inventor: Katada, Toshiharu, Seiko Epson Corporation, Suwa-shi, Nagano-ken 392-8502 (JP); Hisamatsu, Yutaka, Seiko Epson Corporation, Suwa-shi, Nagano-ken 392-8502 (JP); Nakaoka, Yasushi, Seiko Epson Corporation, Suwa-shi, Nagano-ken 392-8502 (JP)
(74) Representative: Winter, Brandl, Fürniss, Hübner, Röss, Kaiser, Polte Partnerschaft

(57) **Abstract**

A constructed system includes multiple clients, a server like a print portal, and multiple printers connecting with a network. A client transmits a printing requirement, which specifies a content of interest to be printed, to the print portal through communication C1. The printing requirement is kept in the print portal in such a state that enables specification by address information IPMP of the client. Direct communication C2 is established between a printer and the client by means of feeble radio wave or infrared, and the print portal fetches address information IPMP of the client and identification information of the printer through the direct communication C2. The print portal compares the two pieces of address information received on the two different communication lines with each other and specifies the printer identified by the identification information as an output resource. This arrangement enables the output resource to be easily specified in the process of printing via the network without any troublesome operations on the client.

## Description

### BACKGROUND OF THE INVENTION

### Field of the Invention

The present invention relates to a technique of outputting images, sound, and other data via a network.

### Description of the Related Art

A variety of printers are used as an output device of computers. The printer is conventionally one-to-one connected to a computer via a specific cable like a two-way parallel interface (hereinafter referred to as 'local connection'), and receives data from the computer to carry out printing. With recent advancement of LANs (Local Area Networks), multiple printers connecting with a network share one or plural printers connected to the network.

Application of a certain protocol called IPP (Internet Printing Protocol) actualizes printing between an arbitrary client and an arbitrary printing apparatus, both connecting with the Internet. In this application, however, the output resource is restricted to printing apparatuses having known URIs (Uniform Resource Indicators). The simple application of IPP thus does not attain printing with the high utility that allows free choice of the output resource on the network.

In any of the known applications mentioned above, the state of connection of the printer with the computer is generally fixed. In other words, printing is typically carried out at a fixed location for each owner of the computer.

The recent development of the information infrastructure, such as the Internet, and the improvement in mobility of terminals used for access to the information infrastructure, such as mobile computers and cellular phones, enable access to information from any locations. In such circumstances, the technique of allowing free choice of the output resource for printing on the network has highly been demanded. One desired procedure uses a closest printing apparatus to carry out printing immediately after collection of information to be printed. Such a printing requirement should readily be executable from any mobile terminal.

The printing system via the network generally has an extremely large number of available output resources. The conventional method of showing the client a list of all the available output resources and asking the client to select a desired output resource requires relatively troublesome operations and significantly lowers the convenience. Retrieval of a printing apparatus is another possible method, but this also requires troublesome operations like input of retrieval conditions. The troublesome operations are not negligible especially in the case of giving a printing requirement from a mobile terminal.

Such requirement is not restricted to printing but is commonly found in general output devices for images, documents, sound, and any other data.

### SUMMARY OF THE INVENTION

The object of the present invention is thus to provide a technique of readily specifying an output resource in the process of outputting images, sound, and other data via a network.

At least part of the above and the other related objects is attained by an output mediation server, as a first construction, that mediates an output requirement between a client and one of multiple output devices, which are connected to a network. The output mediation server includes a specification information fetching module and a transmission module. Here the network is not restricted to a wide area network like the Internet but also includes relatively limited networks like LAN (Local Area Network) and Intranet. The output device may be any of diverse devices that output images, documents, sound, and other data. Typical examples include printing devices that print images, display devices that display images like projectors and displays, and audio equipment that output sound.

The specification information fetching module fetches specification information for specifying the output requirement via the output device through direct communication between the client and the output device. Here the direct communication represents communication established between the client and the output device not via the network. The transmission module transmits an output requirement meeting the fetched specification information to the output device on a line of fetching the specification information.

The output mediation server as the first construction receives two pieces of information from the client on two different lines and collates the received two pieces of information to each other, so as to specify the output resource. The first line is the output requirement transmitted from the client to the output mediation server. The second line is the specification information fetched from the client via the output device as the output resource. The specification information is the piece of information that is capable of specifying the output requirement. The output mediation server thus readily collates the two pieces of information received on the two different lines to each other. The output device, which communicates with the client, is specified based on the result of the collation. This arrangement enables the user to output a selected image or other data without any troublesome designation of the output resource. This arrangement does not require retrieval of the output device and thus advantageously reduces the processing load applied to the output mediation server.

Any of diverse information may be used for the specification information. For example, identification information assigned to the output requirement may be set to the specification information. Typical examples of such identification information include a job number assigned to the output requirement, a file name for specifying a content to be output, and an URL (Uniform Resource Locator).

The specification information may be identification information for specifying either the client or the user as the transmitter of the output requirement. Typical examples of such identification information include address information used for communication by the client and a user ID.

The output requirement represents a series of data transmitted in the course of execution of output. There are at least two processes of supplying output data to the output device via the network. In the first process, the client transmits the output data to the output device. In the second process, the client issues an output requirement including location of a content of interest to be output. Either the output device or an output mediation server that mediates the output requirement fetches the specified content of interest and implements output. The output mediation server attaining such function includes an input module that receives an output requirement transmitted from the client; a fetching module that fetches a specified content of interest from the client; and a transmission module that transmits the output requirement to an output device specified by the client. In this configuration, the form of the output requirement is converted from the location of the output data into a substantive content. In the specification hereof, the term 'output requirement' represents a series of data for substantially specifying the details of the output including such conversion.

In accordance with one preferable application of the first construction, the output mediation server further includes a presentation module that gives the client, which is specified by the specification information, a list of the output devices on the line of fetching the specification information, prior to the transmission of the output requirement. This application enables the client to check the output device specified as the output resource.

There may be a plurality of output devices that are directly communicable with the client. In this case, a preferable configuration shows the client the above list of the available output devices and asks the client to input specific information for specifying an output device in the list as the output resource. This arrangement enables the user to arbitrarily select a desired output device in a practical range, thus enhancing the convenience.

A sub-combination of the first construction is an output device that implements output in response to the output requirement. The output device includes: a communication module that establishes direct communication with the client; a fetching module that fetches specification information for specifying an output requirement via the communication module; and a transmission module that relates the specification information to information for specifying the output device and transmits the related information to the output mediation server.

The technique of the present invention is not restricted to the application utilizing the output mediation server. The present invention is also directed to, as a second construction, an output requirement device that transmits an output requirement via a network to an output device connecting with the network. The output requirement device includes a communication module, a fetching module, and a transmission module.

The communication module establishes direct communication with the output device. The fetching module fetches location information for specifying a location of the output device on the network from the output device via the communication module. The location information is, for example, address information. The transmission module transmits the output requirement to the output device, based on the fetched location information.

The output requirement device as the second construction directly fetches the location information of the output device through the direct communication, thus enabling the output resource to be readily specified without any troublesome operations. In the second construction, the direct communication may be established between the output requirement device and multiple output devices. In this case, a preferable configuration shows a list of available output devices that directly communicate with the output requirement device, and asks the user to select a desired output device.

A sub-combination of the second construction is an output device that implements output in response to an output requirement sent from an output requirement device connecting with a network. The output device includes: a communication module that establishes direct communication with the output requirement device; and a transmission module that transmits location information for specifying a location of the output device on the network to the output requirement device via the communication module.

The present invention is also directed to, as a third construction, an output requirement device that includes a communication module, a notification module, an input module, and a transmission module. The second construction fetches the location information of the output device via the communication module, whereas the third construction fetches the location information of the output device via the network.

In the output requirement device as the third construction, the notification module informs the output device of first location information for specifying a location of the output requirement device on the network via the communication module. The notification is implemented through direct communication of the output requirement device with the output device. The output device, which has received the first location information, can transmit specific information to the output requirement device via the network. The specific information includes second location information for specifying a location of the output device on the network. The output requirement device transmits the output requirement to the output device, based on the second location information received by the input module.

The output requirement device as the third construction fetches the location information of the output device via the network and through the direct communication of the output requirement device with the output device, thus enabling the output resource to be readily specified without any troublesome operations. In the third construction, the direct communication may be established between the output requirement device and multiple output devices. In this case, a preferable configuration shows a list of available output devices that directly communicate with the output requirement device, and asks the user to select a desired output device.

A sub-combination of the third construction is an output device that implements output in response to an output requirement sent from an output requirement device connecting with a network. The output device includes: a communication module that establishes direct communication with the output requirement device; a fetching module that fetches the first location information via the communication module; and a transmission module that transmits the second location information to the output requirement device via the network.

In the first through the third constructions discussed above, information is transmitted between the client or the output requirement device and the output device through direct communication. In order to attain selection of the output device in a practical range, the communicable range is preferably restricted within a predetermined distance from the output device.

Infrared or feeble radio wave may be utilized for such communication. One example of the latter case is Bluetooth (trademark). Communication is not restricted to radio communication, but may be via a wire connecting the client with the output device.

The technique of the present invention is not restricted to the applications of the output mediation server, the output device, and the output requirement device discussed above, but may be actualized by a diversity of other applications, such as corresponding mediation method, output method via a network, and output requirement method. The other applications also include computer programs that cause the computer to attain these methods, a diversity of signals equivalent to the computer programs, and recording media in which such computer programs are recorded.

Typical examples of the recording media include flexible disks, CD-ROMs, magneto-optic discs, IC cards, ROM cartridges, punched cards, prints with barcodes or other codes printed thereon, internal storage devices (memories like a RAM and a ROM) and external storage devices of the computer, and a variety of other computer readable media.

These and other objects, features, aspects, and advantages of the present invention will become more apparent from the following detailed description of the preferred embodiments with the accompanying drawings.

### BRIEF DESCRIPTION OF THE DRAWINGS

Fig. 1 illustrates the general architecture of a printing system;
Fig. 2 shows flow of data in the process of printing E mails;
Fig. 3 is a time chart in the process of printing E mails;
Fig. 4 shows an exemplified interface in the process of printing E mails;
Fig. 5 shows functional blocks of a print portal;
Fig. 6 illustrates the internal structure of a core module 130;
Fig. 7 shows the construction for simplified specification of a desired output resource;
Fig. 8 shows a sequence of printing process by simplified specification;
Fig. 9 is a flowchart showing a series of printing process executed in a second embodiment; and
Fig. 10 is a flowchart showing a series of printing process executed in a third embodiment.

### DESCRIPTION OF THE PREFERRED EMBODIMENTS

Some modes of carrying out the present invention are discussed below as embodiments of a printing system via a network.
A. Basic System Architecture
   A1. Overview of System
   A2. Functionality
   A3. Configuration of Functional Blocks
B. Specification of Output Resource
C. Printing Process By Simplified Specification
D. Second Embodiment
E. Third Embodiment
F. Modifications

### A. Basic System Architecture

### A1. Overview of System

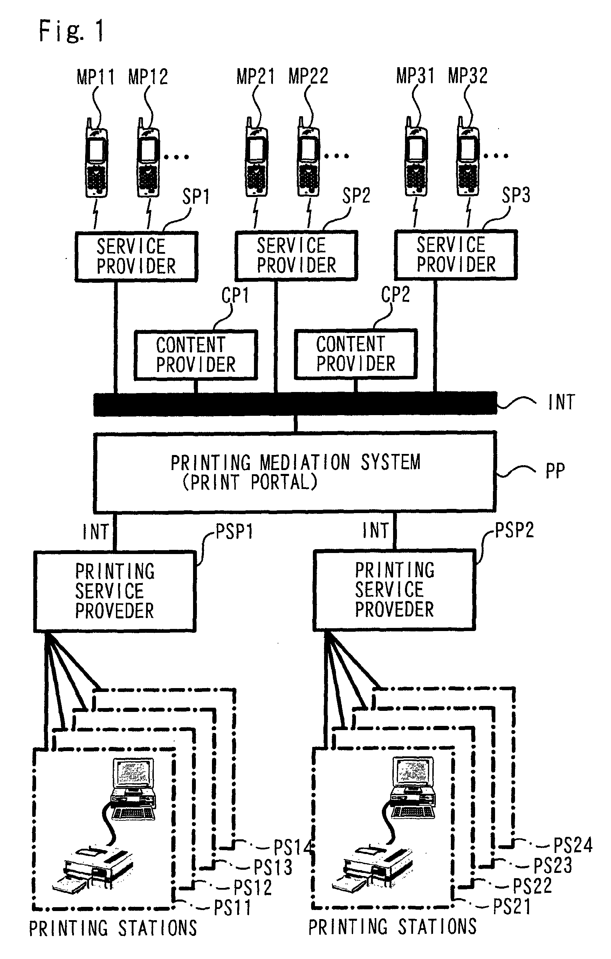

Fig. 1 illustrates the general architecture of a printing system. This embodiment regards the system that executes printing via the Internet. The similar architecture may be applicable to relatively limited network environments, such as LANs (Local Area Networks) and computer communication.

In the system of this embodiment, a diversity of servers and clients are connected to the Internet INT. For convenience of explanation, the connection is shown in a hierarchical manner, but the respective constituents enable mutual transmission of information via the Internet INT. For clarity of illustration and explanation, only a limited number of constituents are shown, although there is no limit of in number of connections. The technique of the embodiment executes a printing operation with an arbitrary printer under the system architecture including a large number of servers and clients connected with one another via the Internet INT.

This embodiment uses, as the clients, mobile phones MP11, MP12, MP21, MP22, MP31, MP32 having the access functionality to the Internet. Each of these mobile phones, for example, MP11 gains access to the Internet via any of service providers SP1, SP2, and SP3. The clients are not restricted to the mobile phones but may be personal computers.

Content providers CP1 and CP2 are also connected to the Internet INT. In the system of this embodiment, these content providers, for example, CP1, provide contents to be printed. The content providers include Web page providers on the Internet INT.

In the system of this embodiment, printing stations, for example, PS11, are output resources. The printing stations like PS11 represent printers that enable transmission of data via the Internet. The printing station is constructed, for example, by combining a computer connected to the Internet with a printer locally connected to the computer. The printing stations may be located in rather private spaces with relatively limited users like individual houses and offices or in rather public spaces like stores and hotels.

In the system of this embodiment, in response to an instruction from the client MP11, contents provided by the content provider CP1 are transmitted to the printing station, which executes an actual printing operation. Two different-layered servers, that is, upper-layer and lower-layer servers, mediate data between the clients and the printing stations.

In the illustrated example, the upper-layer server is a printing mediation system (print portal) PP, and the lower-layer servers are printing service providers PSP1 and PSP2.

The lower-layer servers, such as the printing service provider PSP1, function to manage the printing stations like PS11. In the illustrated example, the printing service provider PSP1 manages printing stations PS11 to PS14, whereas the printing service provider PSP2 manages printing stations PS21 to PS24. In the case where the printing stations like PS11 are located in individual stores, for example, the respective printing service providers PSP1 may be owned by different business proprietors. A business proprietor A owns the printing service provider PSP1 and manages the printing stations PS11 to PS14 located in its head quarter and branch shops. A business proprietor B owns the printing service provider PSP2 and manages the printing stations PS21 to PS24. Such arrangement enables each business proprietor to manage its own printing stations and supply unique services relating to the mediation of print data, for example, discount service.

The upper-layer server, that is, the print portal PP, manages the printing service providers PSP1 and PSP2. The print portal PP thus indirectly manages the printing stations like PS11 via the printing service providers PSP1 and PSP2. The upper-layer server provides common functionality even when the printing service providers PS1 and PS2 are run by the different business proprietors. For example, the upper-layer server provides a standard interface in response to a print request from the client MP11. This desirably enhances the utility of the users.

The upper-layer server and the lower-layer server are functionally parted from each other, and each server may not be constructed as a single server. The functionality of the upper-layer server and the lower-layer server discussed below may be distributed into multiple servers.

### A2. Functionality

The internal structure of each constituent included in the system of the embodiment will be discussed later. In order to elucidate the functionality of the servers and the other constituents, the following description regards a concrete example of printing E mails utilizing the print portal.

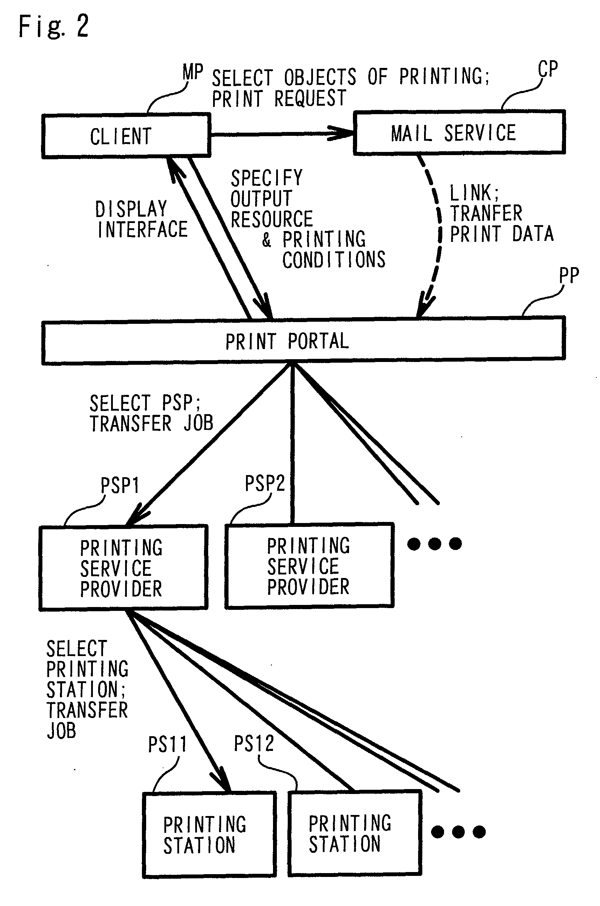

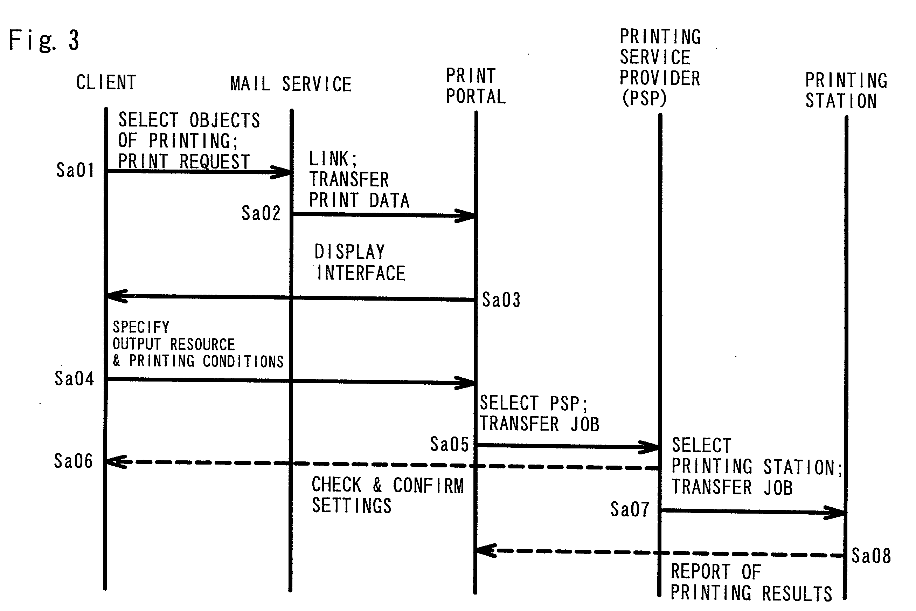

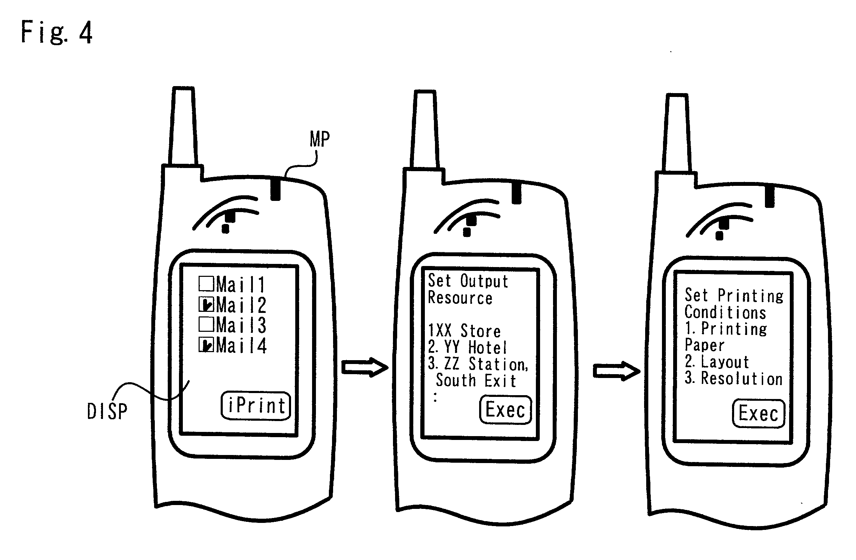

Fig. 2 shows flow of data in the process of printing E mails. Fig. 3 is a time chart in the process of printing E mails. Fig. 4 shows an exemplified interface in the process of printing E mails. The functionality of the respective units is discussed with referring to these drawings. In the case of E mails, a mail service CP corresponds to a content provider.

The user first gains access from a client MP to the mail service CP, checks E mails addressed to the user, and selects one or plural mails to be printed. A series of interface windows appearing on a display unit DISP of the mobile phone is shown in Fig. 4. The left-side window shows that there are four mails Mail 1 to Mail 4 addressed to the user and that Mail 2 and Mail 4 have been selected as objects of printing. This interface is provided by the mail service CP. When the user presses a button 'iPrint' on the window, a requirement for execution of printing is transmitted from the mail service CP to the print portal PP (see Sa01 in Fig. 3 and Fig. 2).

When the mail service CP is registered in advance as a content provider in the print portal PP, the button 'iPrint' appears on the window. This button functions as a link to the print portal PP. In response to the requirement for printing by a press of the 'iPrint' button, the destination of access by the client MP is changed to the print portal PP. Print data, that is, data of Mail 2 and Mail 4, is then transmitted from the mail service CP to the print portal PP (see Sa02 in Fig. 3 and Fig. 2).

The print portal PP subsequently provides the client MP with interfaces for specifying the output resource and printing conditions (see Sa03 in Fig. 3 and Fig. 2). Here describes the standard method of designating a desired output resource, that is, the method of selecting the desired output resource in a list. The system of this embodiment may utilize communication between the printing station and the client to easily specify the desired output resource without any troublesome operation. This simplified method will be discussed later.

The center drawing of Fig. 4 shows an interface window for designating the output resource. Available printing stations are enumerated for the designation of the output resource. The list of the available output resources may be displayed in a hierarchical manner. For example, when the user selects 'XX Store' in the list shown in Fig. 4, all shops belonging to the XX Store chain are enumerated. One modified procedure may cause the user to select one among available printing service providers on the first stage of the hierarchical designation. When there are a large number of available printing stations, the number of hierarchical stages and the number of lists displayed on the respective hierarchical stages increase.

The right-side drawing of Fig. 4 shows an interface window for specifying the printing conditions. Typical examples of the printing conditions include the paper size, the layout, and the resolution. Selection of a 'Printing Paper' menu enables the detailed settings for the printing paper, for example, the size A4 or B5. Selection of a 'Layout' menu enables the detailed settings for the layout, for example, 1 page /sheet or 2 pages /sheet. Selection of other menus enables the detailed settings for other printing conditions. The settings of printing are not restricted to this example, but a diversity of fields may be provided by taking into account the utility.

When the user completes the specification of the output resource and the printing conditions with the above interface, the specified information is transmitted to the print portal PP (see Sa04 in Fig. 3 and Fig. 2). The print portal PP selects the printing service provider PSP1 as the destination of transmission of a print job, based on the received information, and transfers the print job to the selected printing service provider PSP1 (see Sa05 in Fig. 3 and Fig. 2). Here the printing service provider PSP1, which manages the printing station PS11 designated by the user as the output resource, is selected as the destination of transmission of the print job.

The printing service provider PSP1 that has received the print job selects the printing station PS11 and transfers the print job to the selected printing station PS11 (see Sa07 in Fig. 3 and Fig. 2). Here the printing station PS11 designated by the user is selected as the destination of transmission.

The print data is converted to a PDF file, which is a general purpose format, in the course of mediation with the print portal PP and the printing service provider PSP1. The PDF file is generated as a coded file using a preset password for enhanced security in the process of printing mediation. The details of the file conversion process will be discussed later. The printing station PS11 analyzes the PDF file and executes a printing operation.

As shown by Sa06 in Fig. 3, a display including the designated output resource and the specified printing conditions may be given to the client MP for the purpose of check and confirmation, prior to the transfer of the print job from the printing service provider PSP1 to the printing station PS11. On completion of the printing operation, a report of printing results may be transmitted from the printing station PS11 to the print portal PP. The print portal PP detects the normal completion of the printing operation based on the report, and carries out post services like accounting.

The above example mediates printing with the two different layered servers, that is, the print portal PP as the upper-layer server and the printing service providers like PSP1 as the lower-layer servers. The use of the two-layered servers for the mediation has advantages discussed below.

The lower-layer server may be organized by each business line, in order to provide unique services characteristic of the business line and allow discrimination from other business proprietors. Each business proprietor can rather readily take in the users and the content providers registered with the print portal PP as the potential customers of its business line.

Even when the lower-layer servers are individually organized by different business lines, the upper-layer server provides the users with a standard interface. This enhances the utility of the print portal.

The user who has been registered with the print portal PP can readily utilize a diversity of lower-layer servers under the control of the print portal PP. This arrangement does not require time-consuming, complicated registration and other related work for each lower-layer server, thus enhancing the utility. The content providers share such advantages. The content provider that has been registered with the print portal PP can readily increase in number the users and the output resources of the offered contents.

The printing mediation system is not restricted to the construction utilizing the two-layered servers, but may be organized by a single-layer server configuration having the combined functions of the print portal and the printing service providers.

### A3. Configuration of Functional Blocks

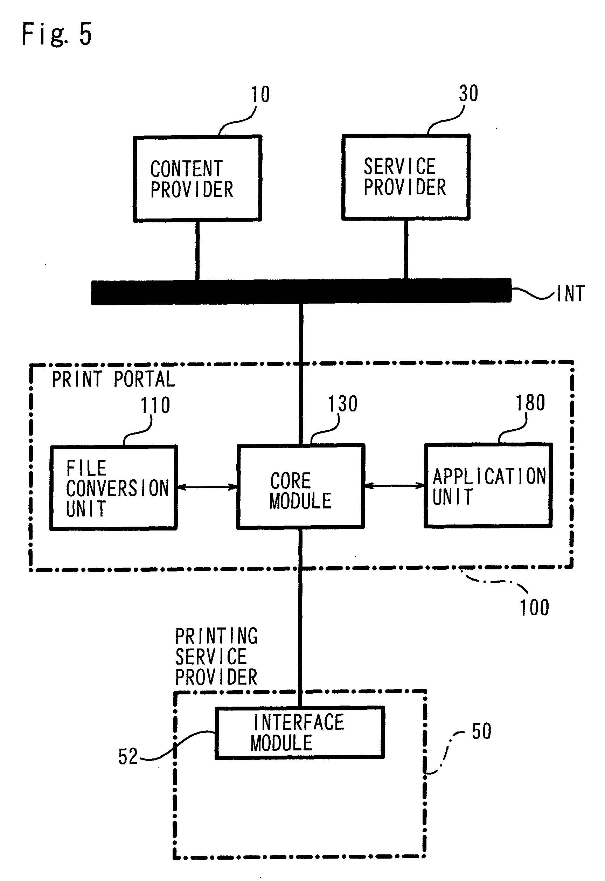

Fig. 5 shows functional blocks of the print portal. For convenience of explanation, the respective constituents are expressed by numbers different from the symbols of Fig. 1, although the constituents of the identical names have the same functions.

As illustrated, a print portal 100 mainly includes three functional blocks, a core module 130, a file conversion unit 110, and an application unit 180. In this embodiment, these functional blocks are attained by the software.

The file conversion unit 110 converts the format of print data to a predetermined intermediate file in the course of mediation of the print data. The PDF is used as the general purpose format in this embodiment.

The application unit 180 executes the main functions of the print portal 100 to mediate the print data and a diversity of additional functions.

The core module 130 cooperates with the file conversion unit 110 and the application unit 180 to mediate the print data. The core module 130 takes charge of communication with a content provider 10, a service provider 30, and a printing service provider 50. The printing service provider 50 has an interface module 52 to ensure the flexibility of a protocol in connection with the print portal 100.

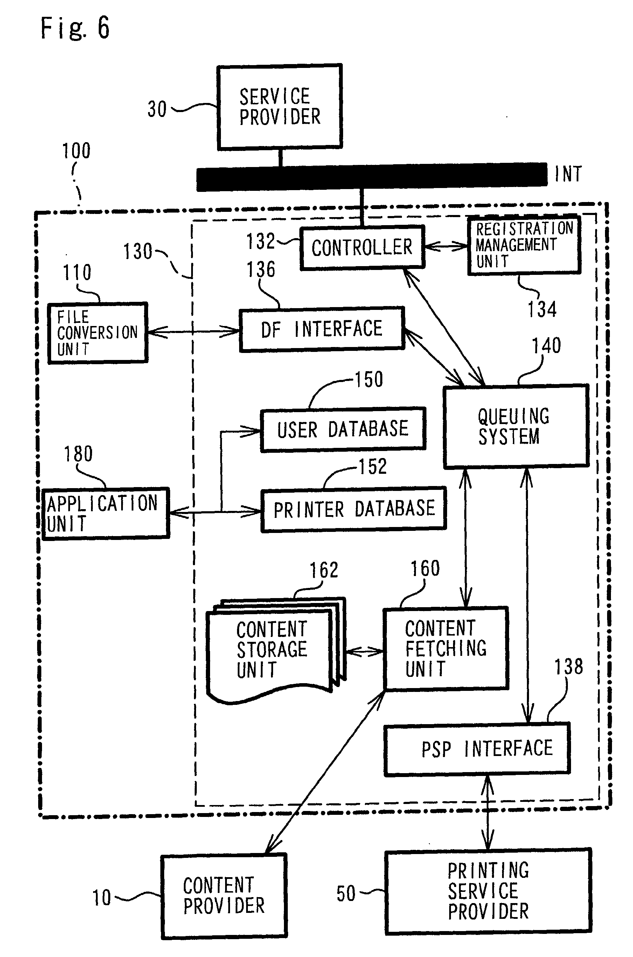

Fig. 6 illustrates the internal structure of the core module 130. This internal structure is only illustrative, and the core module 130 may have any of other diverse constructions.

A controller 132 controls the operations of the respective functional blocks of the print portal 100 and transmission of information to and from the outside via the internet INT. The control includes registration and management of users and providers, control of the status of print jobs, acceptance and cancellation of print requests, and retrieval of printers as the output resource. The controller 132 also provides an interface window to allow transmission of data between the print portal 100 and the outside.

A registration management unit 134 takes charge of registration and management of the user utilizing the print portal 100, the content provider 10, and the printing service provider 50. The registration management unit 134 creates an interface window for the registration and management and stores and updates registration-related data in a predetermined data base.

A queuing system 140 relays the operations of the respective functional blocks. In this embodiment, the respective functional blocks are constructed by the object-oriented software. Each functional block refers to a message registered in the queuing system 140, detects the presence of a job to be processed, and executes the actual processing. On completion of the processing, a message representing conclusion of the processing is registered in the queuing system 140. The respective functional blocks execute the processing with the queuing system 140 as the relay. The print portal 100 accordingly actualizes a series of processing, from acceptance of a print request to completion of a printing operation.

In order to attain the series of processing, the queuing system 140 has a content fetching queue, a file conversion queue, a job sending queue, and a job canceling queue.

A content fetching unit 160 gains access to the content provider 10 and fetches a content specified by the user as an object of printing. The fetched content is temporarily stored in a content storage unit 162. The content fetching unit 160 refers to the content fetching queue provided in the queuing system 140 and performs the above operation according to the message accumulated in the content fetching queue. After fetching the content, the content fetching unit 160 registers a message to require file conversion of the content in the fine conversion queue provided in the queuing system 140.

The file conversion unit 110 functions to convert the content to the PDF format. Coding with a preset password is also performed in this conversion process. Even when the content is a PDF file, the file conversion unit 110 carries out coding and reconversion to the PDF format. The PDF is the general purpose format. Conversion of the print data to this format advantageously enables output of the print data to a diversity of printers. Another advantage is relatively accurate reproduction of the selected layout in prints. The PDF allows conversion from practically any print data including documents and pictures, so that a wide range of contents can be the object of printing. A page description language, such as Postscript (registered trademark), may alternatively be used as the general purpose format.

In the structure of this embodiment, with a view to relieving the load applied to each server, the file conversion unit 110 is constructed as a separate server from the core module 130. The core module 130 accordingly has a DF interface 136 to allow transmission of data to and from the file conversion unit 110.

The DF interface 136 transfers data to the file conversion unit 110, in response to the message accumulated in the file conversion queue provided in the queuing system 140. When receiving a processed PDF file from the file conversion unit 110, the DF interface 136 registers a message of print job transmission in the job sending queue provided in the queuing system 140. One possible modification omits the DF interface 136 and constructs the file conversion unit 110 to gain direct access to the queuing system 140.

A PSP interface 138 functions to transmit a print job to the printing service provider 50. More specifically, the PSP interface 138 transmits a print job to the designated printing service provider 50, in response to the message accumulated in the job sending queue provided in the queuing system 140. The PSP interface 138 also sends a message of job cancellation accumulated in the job canceling queue. The transmission is attained according to a diversity of protocols set by the printing service provider 50, for example, HTTP (Hypertext Transport Protocol).

The core module 130 includes a diversity of databases, such as a user database 150 and a printer database 152. Although only two databases are illustrated in this embodiment, a greater number of databases may be provided in the core module 130. The registration management unit 134 manages these databases. The databases are utilized for the processing executed in the core module 130, as well as for the processing executed by the application unit 180.

The user database 150 includes files provided for the respective users of the print portal 100. Each file stores user-related attribute information, for example, the user name and the user ID. The printer database 152 has registration of attribute information with regard to the respective printers, for example, the printer name and the ID number. The ID number represents an index utilized to identify the printer in the printing process with the print portal 100.

The system of the embodiment having the construction discussed above carries out the printing process discussed above with reference to Figs. 2 through 4.

### B. Specification of Output Resource

The system of this embodiment utilizes direct communication of the client with the printer to readily specify an output resource. The following describes a method of specifying an output resource in such a manner (hereinafter referred to as simplified specification process).

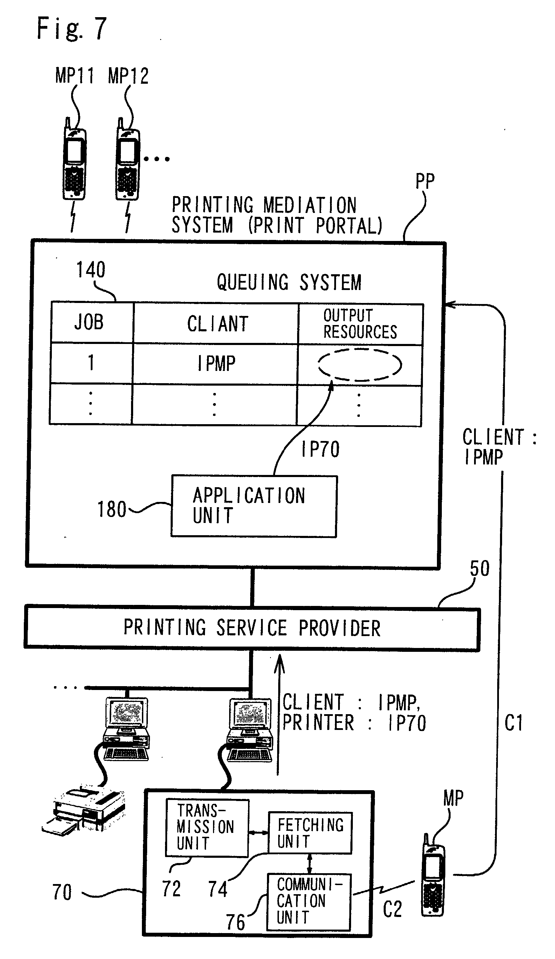

Fig. 7 shows the construction for simplified specification of an output resource. The simplified specification process compares a printing requirement output from the client MP to the print portal PP through communication C1 via the network with information input into the print portal PP via a printer 70 through communication C2, so as to specify the output resource.

The printing requirement through the communication C1 follows the process discussed above with reference to Figs. 2 through 4. The client does not specify the output resource in the simplified specification process, so that the printing requirement is registered in the queuing system 140 without specification of the output resource. The printing requirement is specified by address information IPMP of the client MP used for the communication C1.

The print portal PP collects information for specifying the printing requirement (hereinafter referred to as specification information) via the printer 70. In the arrangement of this embodiment, the address information IPMP of the client MP is used as the specification information. A job number or the URL of a content of interest to be printed, may alternatively be used as the specification information.

The information is received via a specific line including the printer 70 as discussed below. As illustrated, the printer 70 of this embodiment has a communication unit 76 for the direct communication C2 with the client MP. For example, Bluetooth or infrared may be utilized for the direct communication. In another example, the printer 70 is provided with a connector for connection with the client MP. Such communication is established in the case where the client MP is relatively close to the printer 70. Establishment of this communication accordingly proves that there is a client MP in a neighborhood of the printer 70.

The printer 70 is provided with a fetching unit 74. The collection unit 74 controls the communication unit 76 and detects any client MP that establishes the communication C2 at regular intervals. In response to detection of the client MP, the fetching unit 74 fetches the address information IPMP of the client MP via the communication unit 76. The fetched address information is transmitted to the application unit 180 of the print portal PP via a transmission unit 72. Information for identifying the printer 70 is also transferred to the application unit 180. In the arrangement of this embodiment, the address IP70 of the printer is transferred as the identification information.

The application unit 180 receives these pieces of information from the printer 70 and retrieves the queuing system 140 to find a job meeting the specification information. In the illustrated example, Job 1 is the printing requirement satisfying this condition. When finding the printing requirement satisfying the condition, the application unit 180 records the identification information IP70 of the printer 70 in the selected output resource. This process specifies the output resource of Job 1.

### C. Printing Process by Simplified Specification

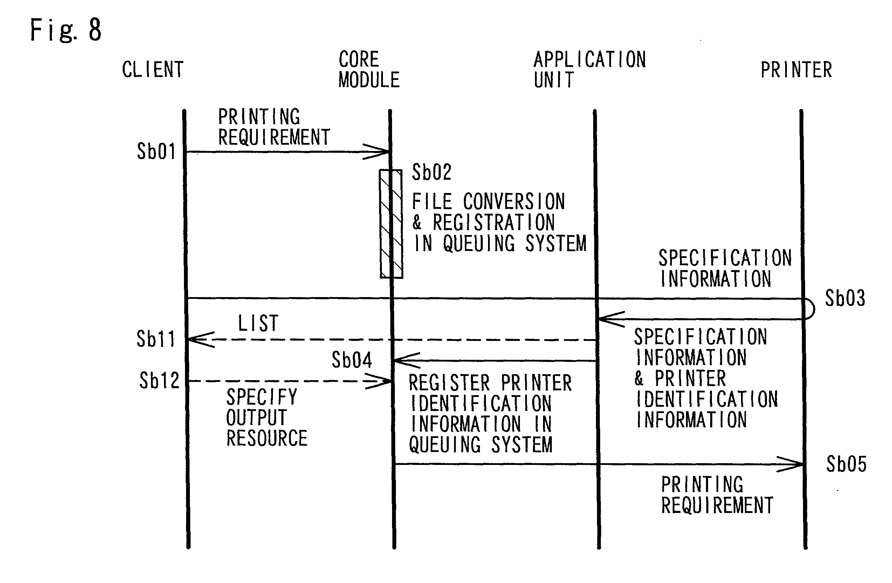

Fig. 8 shows a sequence of printing process by simplified specification.

The client MP first outputs a printing requirement to the print portal PP (step Sb01). The printing requirement includes the address information of the client MP and specification of the content of interest as the object of printing.

In response to input of the printing requirement, the core module 130 of the print portal PP receives a content and converts the content to the PDF format, and registers the printing requirement into the queuing system 140 (step Sb02).

In the case where the client MP is present in a neighborhood of the printer 70, the communication C2 between the client and the printer 70 is established in parallel to the communication C1 between the client MP and the print portal PP. The printer 70 fetches the specification information from the client according to the process discussed above with reference to Fig. 7, and transmits the specification information with printer identification information to the application unit 180 (step Sb03).

The application unit 180 retrieves the queuing system 140 to find a printing requirement that meets the specification information, and registers the printer identification information output from the printer 70 (step Sb04). This completes specification of the output resource. The core module 130 transmits the printing requirement to the specified output resource (step Sb05) to execute printing.

In the construction of the above embodiment, there is only printer that establishes the direct communication C2 with the client. There is, however, a fair possibility that direct communication is established between the client and multiple printers. In such cases, the application unit 180 shows the client a list of available printers that establish the direct communication C2 (step Sb11) and registers a printer selected by the client as the output resource (step Sb12).

The arrangement of the above embodiment specifies a printer, which is in a neighborhood of the client, as the output resource without any troublesome operations. This arrangement thus enhances convenience of printing via the network.

In this embodiment, the address information of the client is used as the specification information. The specification information is, however, not restricted to the address information of the client, but may be any information that specifies the client in a neighborhood of the printer as the transmission source of the printing requirement from the print portal PP to the security system 60. Typical examples of such information include the user ID and the password used for printing, the job number included in the printing requirement, the file name for specifying the content, the URL, and the address information of the print portal.

### D. Second Embodiment

The procedure of the first embodiment collates the two pieces of information input into the print portal PP on the two different lines with each other, so as to specify the output resource. In the construction of a second embodiment, the client directly fetches the identification information of the printer to readily specify the output resource.

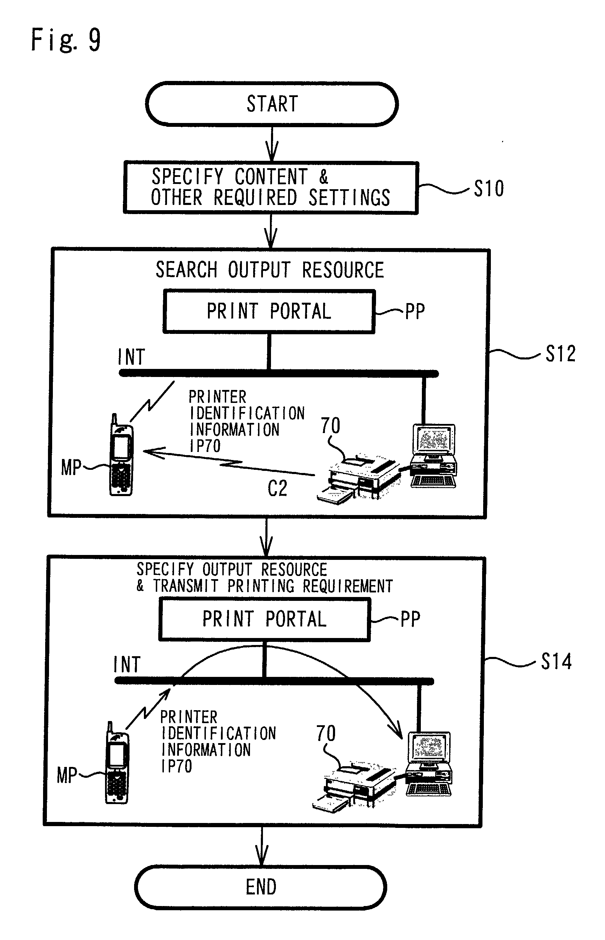

Fig. 9 is a flowchart showing a series of printing process executed in the second embodiment. This shows the details of the processing executed in the client MP. The user of the client MP first specifies the content and other required settings (step S10). The client MP then searches an available printing apparatus as an output resource for the purpose of specifying the output resource (step S12). The client MP may carry out the search automatically or in response to a user's specification. In one preferable arrangement, the user selects a desired option between the designation based on the selection in the list as shown in Fig. 4 and the simplified specification. The search of the output resource is carried out at step S12 when the user selects the simplified specification.

In the process of searching the output resource, the client MP fetches the identification information IP70 of the printer 70 through the direct communication C2 shown in Fig. 7. Although only one printer 70 is illustrated here, the direct communication C2 may be established between the client MP and multiple printers. The processing of step S12 fetches the identification information with regard to each of the multiple printers that allow the direct communication C2 with the client MP. The direct communication between the client MP and the printer in the second embodiment is similar to that in the first embodiment. The difference from the first embodiment is that the printing requirement has not yet been transmitted to the print portal at this moment in the procedure of the second embodiment.

The client MP displays a list of available printers that establish the direct communication C2 and asks the user to specify a desired output resource. In response to specification of the desired output resource, the client MP transmits the printing requirement including the specified output resource to the print portal PP (step S14). The print portal PP processes the transmitted printing requirement and mediates the processed printing requirement to the specified printer 70 according to the procedure discussed previously with reference to Figs. 2 and 3. The specified printer 70 then starts the actual printing operation.

The second embodiment also utilizes the direct communication between the client and the printer to attain the simplified specification of the output resource. The arrangement of the second embodiment does not require the print portal to execute any additional processing for specification of the output resource, thus advantageously reducing the load applied to the print portal. Because of this characteristic, the technique of the second embodiment is applicable to printing not via the print portal, for example, printing utilizing the Internet Printing Protocol IPP.

### E. Third Embodiment

In the arrangement of the second embodiment, the client fetches the identification information of the printer through the direct communication C2. The simplified specification is also actualized by the arrangement of transmitting the address information of the client to the printer 70 through the direct communication C2.

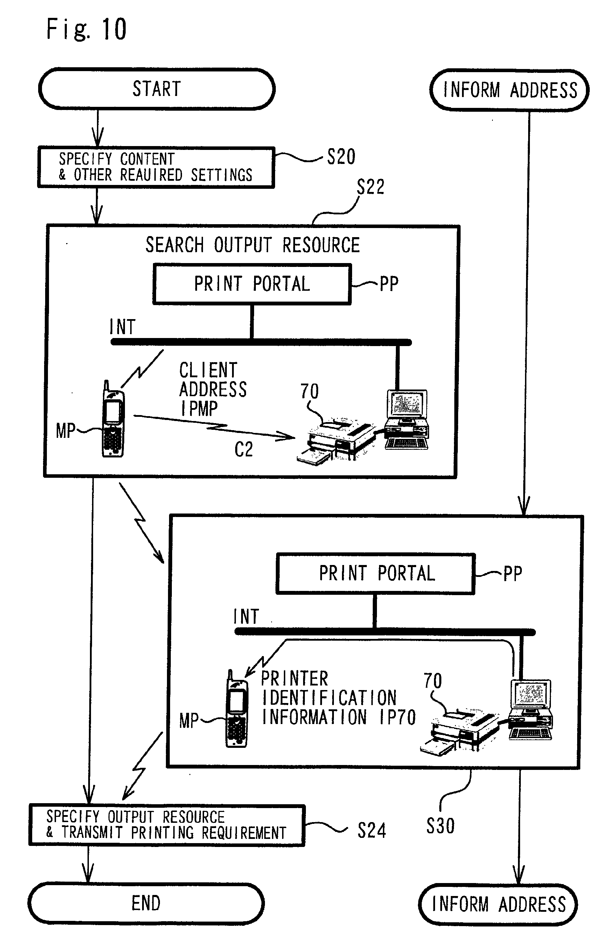

Fig. 10 is a flowchart showing a series of printing process executed in a third embodiment. This shows a processing flow executed by the client MP in parallel to a processing flow executed by the printer 70. The user of the client MP first specifies the content and other required settings (step S20). The client MP then searches an available printing apparatus as an output resource for the purpose of specifying the output resource (step S12).

In the process of searching the output resource, the client MP informs the printer 70 of the address information IPMP of the client MP through the direct communication C2. When the direct communication C2 is established between the client MP and multiple printers, the client MP informs the multiple printers of the address information IPMP. The address information IPMP allows communication from the printer to the client via the network and is specified according to the protocol used for the communication.

Each printer receiving the address information from the client MP transmits self identification information to the client MP via the network (step S30). The self identification information here represents any information that enables the print portal PP to specify the output resource, for example, the address information in the case of printing not via the print portal PP.

The client MP displays a list of available printers that establish the direct communication C2 and asks the user to specify a desired output resource. In response to specification of the desired output resource, the client MP transmits the printing requirement including the specified output resource to the print portal PP (step S24). The specified printer 70 then starts the actual printing operation.

The arrangement of the third embodiment utilizes the direct communication between the client and the printer to attain the simplified specification of the output resource. The procedure of the third embodiment confirms establishment of communication of each printer via the network through the process of specifying the output resource. This procedure effectively prevents any printer that establishes communication with the client but is not connected to the network from being specified as the output resource. The technique of the third embodiment thus enhances the convenience by the simplified specification, while ensuring successful printing.

Like the second embodiment, the third embodiment advantageously reduces the load applied to the print portal. The technique of the third embodiment is also applicable to printing not via the print portal.

### F. Modifications

The above embodiments regard output to the printing apparatus. The technique of the present invention is applicable to a diversity of output devices, for example, image display devices like projectors and displays and audio equipment that output sound.

The above embodiments regard printing via the Internet. The technique of the present invention is also applicable to relatively limited networks like LANs (Local Area Networks) and Intranets.

The above embodiments and their modifications are to be considered in all aspects as illustrative and not restrictive. There may be many modifications, changes, and alterations without departing from the scope or spirit of the main characteristics of the present invention. All changes within the meaning and range of equivalency of the claims are therefore intended to be embraced therein. For example, the series of control processes discussed above may be attained by the hardware construction, instead of the software configuration.

The scope and spirit of the present invention are indicated by the appended claims, rather than by the foregoing description.

## Claims

1. An output mediation server that mediates an output requirement between a client and one of multiple output devices, which are connected to a network, said output mediation server comprising:
a specification information fetching module that fetches specification information for specifying the output requirement via said output device through direct communication between said client and said output device; and
a transmission module that transmits an output requirement meeting the fetched specification information to said output device on a line of fetching the specification information.

2. An output mediation server in accordance with claim 1, said output mediation server further comprising:
a presentation module that gives said client, which is specified by the specification information, a list of said output devices on the line of fetching the specification information, prior to the transmission of the output requirement.

3. An output mediation server in accordance with claim 2, said output mediation server further comprising:
an input module that receives an input of specific information for specifying an output device in the list as an output resource, from said client,
wherein said transmission module transmits the output requirement to said output device specified by the input specific information.

4. An output device that implements output in response to an output requirement transmitted through mediation of an output mediation server according to an instruction from a client in a network, to which said client and said output mediation server are connected, said output device comprising:
a communication module that establishes direct communication with said client;
a fetching module that fetches specification information for specifying the output requirement via said communication module; and
a transmission module that relates the specification information to information for specifying said output device and transmits the related information to said output mediation server.

5. An output requirement device that transmits an output requirement via a network to an output device connecting with the network, said output requirement device comprising:
a communication module that establishes direct communication with said output device;
a fetching module that fetches location information for specifying a location of said output device on the network from said output device via said communication module; and
a transmission module that transmits the output requirement to said output device, based on the fetched location information.

6. An output device that implements output in response to an output requirement sent from an output requirement device connecting with a network, said output device comprising:
a communication module that establishes direct communication with said output requirement device; and
a transmission module that transmits location information for specifying a location of said output device on the network to said output requirement device via said communication module.

7. An output requirement device that transmits an output requirement via a network to an output device connecting with the network, said output requirement device comprising:
a communication module that establishes direct communication with said output device;
a notification module that informs said output device of first location information for specifying a location of said output requirement device on the network via said communication module;
an input module that receives, via the network, second location information for specifying a location of said output device on the network; and
a transmission module that transmits the output requirement to said output device, based on the second location information received by said input module.

8. An output device that implements output in response to an output requirement sent from an output requirement device connecting with a network, said output device comprising:
a communication module that establishes direct communication with said output requirement device;
a fetching module that fetches first location information for specifying a location of said output requirement device on the network via said communication module; and
a transmission module that transmits a second location information for specifying a location of said output device on the network to said output requirement device via the network.

9. An output device in accordance with any one of claims 4, 6, and 8, wherein said communication module has a communicable range that is restricted to be within a predetermined distance from said output device.

10. An output device in accordance with claim 9, wherein said communication module utilizes either one of infrared and feeble radio wave for communication.

11. A mediation method that mediates an output requirement between a client and one of multiple output devices, which are connected to a network, said mediation method comprising the steps of:
fetching specification information for specifying the output requirement via said output device through direct communication between said client and said output device; and
transmitting an output requirement meeting the fetched specification information to said output device on a line of fetching the specification information.

12. An output method that implements output in response to an output requirement transmitted through mediation of an output mediation server according to an instruction from a client in a network, to which said client and said output mediation server are connected, said output method comprising the steps of:
(a) fetching specification information for specifying the output requirement through direct communication with said client;
(b) relating the specification information to information for specifying an output device and transmitting the related information to said output mediation server; and
(c) implementing output based on the output requirement transmitted from said output mediation server, in response to said step (b).

13. An output requirement method that transmits an output requirement via a network to an output device connecting with the network, said output requirement method comprising the steps of:
fetching location information for specifying a location of said output device on the network from said output device through direct communication with said output device; and
transmitting the output requirement to said output device, based on the fetched location information.

14. An output method that causes an output device to implement output in response to an output requirement sent from an output requirement device connecting with a network, said output method comprising the steps of:
(a) transmitting location information for specifying a location of said output device on the network to said output requirement device through direct communication with said output requirement device; and
(b) causing said output device to implement output based on the output requirement transmitted from said output requirement device, in response to said step (a).

15. An output requirement method that transmits an output requirement via a network to an output device connecting with the network, said output requirement method comprising the steps of:
informing said output device of first location information for specifying a location of said output requirement device on the network through direct communication with said output device;
receiving, via the network, second location information for specifying a location of said output device on the network; and
transmitting the output requirement to said output device, based on the input second location information.

16. An output method that causes an output device to implement output in response to an output requirement sent from an output requirement device connecting with a network, said output method comprising the steps of:
(a) fetching first location information for specifying a location of said output requirement device on the network through direct communication with said output requirement device;
(b) transmitting a second location information for specifying a location of said output device on the network to said output requirement device via the network; and
(c) causing said output device to implement output based on the output requirement transmitted from said output requirement device, in response to said step (b).

17. A recording medium in which a computer program is recorded in a computer readable manner, said computer program causing a computer to mediate an output requirement between a client and one of multiple output devices, which are connected to a network, said computer program causing the computer to attain the functions of:
fetching specification information for specifying the output requirement via said output device through direct communication between said client and said output device; and
transmitting an output requirement meeting the fetched specification information to said output device on a line of fetching the specification information.

18. A recording medium in which a computer program is recorded in a computer readable manner, said computer program causing an output device including a computer to implement output in response to an output requirement transmitted through mediation of an output mediation server according to an instruction from a client in a network, to which said client and said output mediation server are connected, said computer program causing the computer to attain the functions of:
fetching specification information for specifying the output requirement through direct communication with said client; and
relating the specification information to information for specifying said output device and transmitting the related information to said output mediation server.

19. A recording medium in which a computer program is recorded in a computer readable manner, said computer program causing a computer to transmit an output requirement via a network to an output device connecting with the network, said computer program causing the computer to attain the functions of:
fetching location information for specifying a location of said output device on the network from said output device through direct communication with said output device; and
transmitting the output requirement to said output device, based on the fetched location information.

20. A recording medium in which a computer program is recorded in a computer readable manner, said computer program causing an output device including a computer to implement output in response to an output requirement sent from an output requirement device connecting with a network, said computer program causing the computer to attain the function of:
transmitting location information for specifying a location of said output device on the network to said output requirement device through direct communication with said output requirement device.

21. A recording medium in which a computer program is recorded in a computer readable manner, said computer program causing a computer to transmit an output requirement via a network to an output device connecting with the network, said computer program causing the computer to attain the functions of:
informing said output device of first location information for specifying a location of said output requirement device on the network through direct communication with said output device;
receiving, via the network, second location information for specifying a location of said output device on the network; and
transmitting the output requirement to said output device, based on the input second location information.

22. A recording medium in which a computer program is recorded in a computer readable manner, said computer program causing an output device including a computer to implement output in response to an output requirement sent from an output requirement device connecting with a network, said computer program causing the computer to attain the functions of:
fetching first location information for specifying a location of said output requirement device on the network through direct communication with said output requirement device; and
transmitting a second location information for specifying a location of said output device on the network to said output requirement device via the network.
